Europäisches Patentamt

European Patent Office

Office européen des brevets

(19)

(11) Numéro de publication: **0 043 785**
**B1**

(12)

# FASCICULE DE BREVET EUROPEEN

(45) Date de publication du fascicule du brevet:
**27.03.85**

(51) Int. Cl.⁴: **B 23 B 31/12**

(21) Numéro de dépôt: **81420098.6**

(22) Date de dépôt: **02.07.81**

(54) **Mandrin de fixation d'un outil sur une machine outil.**

(30) Priorité: **04.07.80 FR 8015314**

(43) Date de publication de la demande:
**13.01.82 Bulletin 82/2**

(45) Mention de la délivrance du brevet:
**27.03.85 Bulletin 85/13**

(84) Etats contractants désignés:
**AT BE CH DE GB IT LI LU NL SE**

(56) Documents cités:
**DE - B - 1 293 671**
**FR - A - 696 938**
**GB - A - 959 175**
**US - A - 1 364 361**
**US - A - 1 668 317**
**US - A - 3 807 745**

(73) Titulaire: **ETABLISSEMENTS AMYOT S.A., 1, rue
Denis-Papin, Pontarlier, Doubs (FR)**

(72) Inventeur: **Amyot, Claude, 4, rue du Moulin, Les Gras
Doubs (FR)**

(74) Mandataire: **Maureau, Philippe, Cabinet Germain &
Maureau Le Britannia - Tour C 20, bld Eugène Déruelle,
F-69003 Lyon (FR)**

## Description

La présente invention a pour objet un mandrin de fixation d'un outil sur une machine outil.

Des mandrins sont fréquemment utilisés pour la fixation d'outils tels que des forets à queues cylindriques sur des machines constituées par exemple par une perceuse électrique (DE-B-1 293 671).

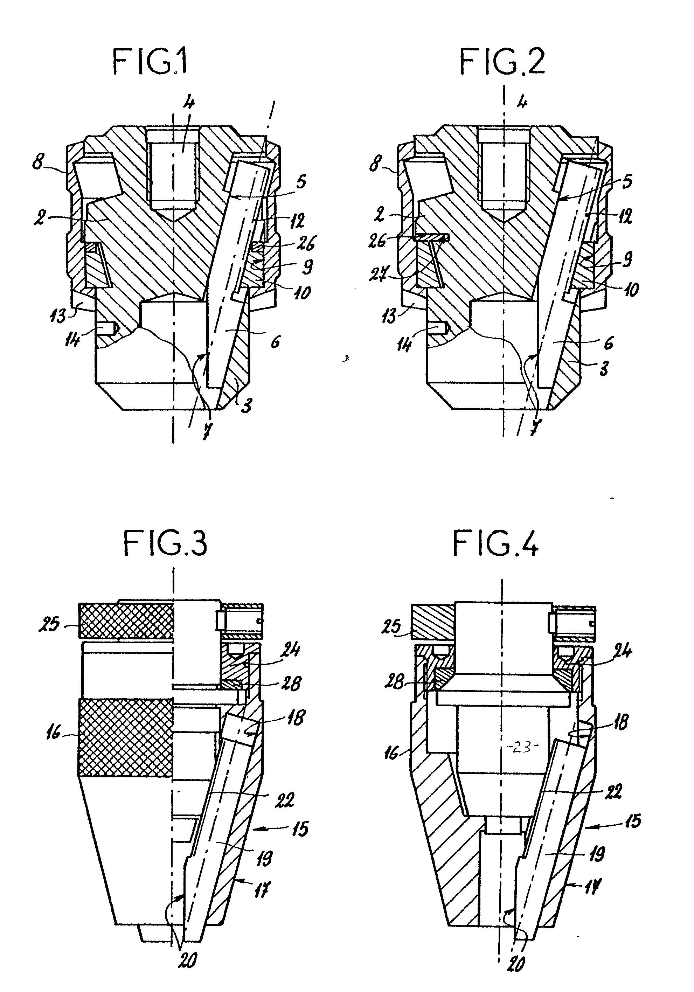

Un mandrin comporte par exemple, et comme montré à la figure 1 du dessin schématique annexé, un corps constitué par deux parties cylindriques, respectivement 2 et 3, de sections différentes. La partie cylindrique de plus grande section est située du côté de la machine et comporte des moyens de fixation constitués par exemple par un alésage axial taraudé 4. A l'extrémité de plus petite section débouchent des alésages 5 cylindriques inclinés, d'un angle de l'ordre de 15° dans le cas présent par rapport à l'axe du corps, l'inclinaison des alésages étant telle qu'ils convergent du côté de plus petite section.

Chaque alésage 5 sert au logement d'un mors 6 de forme cylindrique:

Dans la forme d'exécution représentée au dessin, ces mors sont au nombre de trois, chacun de ceux-ci présentant, à proximité de son extrémité libre et du côté intérieur, un chanfrein 7, de telle sorte que le serrage de l'outil se fasse au contact de trois arêtes appartenant aux trois mors.

La partie de plus grande section 2 du corps est entourée d'une chemise 8 susceptible de pivoter relativement à elle. Cette chemise 8 est moletée extérieurement de manière à faciliter sa manoeuvre. A l'intérieur d'un évidement périphérique 9 ménagé dans la partie 2 du corps est logé un écrou 10, qui est bloqué au contact de la face interne de la chemise 8 et est donc solidaire en rotation de celle-ci.

L'écrou 10 coopère avec des parties filetées 12 que comporte chaque mors.

Le pivotement de la chemise 8 relativement au corps va provoquer un déplacement des mors 6 correspondant à un rapprochement ou à un écartement de ceux-ci suivant le sens de rotation adopté.

L'extrémité de la chemise 8, située du côté de fixation de l'outil, comporte une crémaillère 13 pouvant être actionnée à l'aide d'une clé présentant une denture périphérique, qui est positionnée et guidée par engagement de son extrémité dans un alésage radial borgne 14 ménagé dans la partie antérieure 3 du corps.

Le sens de l'alésage taraudé 4 est tel que le vissage du mandrin sur l'arbre moteur se fasse par rotation dans le même sens que le sens de rotation dudit arbre. En ce qui concerne le taraudage de l'écrou 10 et le filetage 12 des mors 6, ils sont ménagés dans un sens tel que le serrage soit réalisé par rotation de l'écrou dans un sens inverse au sens de rotation de l'arbre moteur.

D'un point de vue pratique, le montage d'un outil tel qu'un foret à queue cylindrique est réalisé de la manière suivante.

Les mors 6 étant en position écartée, la queue cylindrique du foret est engagée entre ceux-ci après quoi la chemise 8 est actionnée en rotation de manière à assurer le serrage de la queue de l'outil par rapprochement des mors 6. Une fois le serrage obtenu, le blocage est réalisé par l'intermédiaire de la clé coopérant avec la crémaillère 13.

Néanmoins, il apparaît, lors de l'opération de blocage, des tensions axiales importantes entre l'écrou 10 et la face en regard du corps 2, qui limitent la possibilité de pivotement de l'écrou par rapport au corps et par suite la qualité du blocage.

C'est ainsi notamment que, lors de l'utilisation sur une perceuse à percussion de forte puissance, les mandrins se desserrent en cours de fonctionnement, les fortes vibrations auxquelles ils sont soumis provoquant la rotation de l'écrou 10 dans le sens du desserrage.

Pour améliorer la qualité du blocage de l'outil, les mandrins équipant les machines outils utilisées dans l'industrie comportent un roulement à billes intercalé entre le corps 2 et l'écrou 10.

Un autre type de mandrin concerne des mandrins autoserrants (US-A-1 668 317). Dans ce cas, les parties filetées que comporte chaque mors sont inclinées dans un sens tel que le serrage de ceux-ci se produit dans un sens de rotation de l'organe de commande, écrou ou vis centrale correspondant au sens de rotation de l'arbre moteur.

La figure 3 du dessin schématique annexé représente un type de mors autoserrant.

Ce mors comprend un corps creux 15 présentant une partie centrale cylindrique 16 moletée et une partie avant tronconique 17. Dans la partie avant sont ménagés des évidements 18, dont chacun sert de logement à un mors 19, dont une extrémité présente un chanfrein 20. Chaque mors présente une partie 22 filetée coopérant avec une pièce centrale filetée 23 bloquée en translation par une collerette 24 montée à l'extrémité postérieure du corps, la pièce 23 faisant saillie de la partie postérieure du corps 15 et étant associée à une bague moletée 25 qui en est solidaire et qui permet son actionnement en rotation.

Le blocage est obtenu après montage de la queue de l'outil entre les mors, par pivotement de la bague 25 et de la pièce 23 dans le sens de rotation de l'arbre moteur.

Il est prévu un roulement à billes entre la collerette et la pièce centrale, afin de limiter les frottements et permettre un serrage suffisant de l'outil sans utilisation d'une clé de serrage. Néanmoins, cette solution exige une très haute dureté des chemins de roulements et conduit à des prix de revient élevés. En outre, si un tel mandrin est utilisé sur une machine à percussion, il se produit pratiquement un blocage de l'outil rendant son desserrage extrêmement difficile.

La présente invention vise à améliorer les conditions de tenue de l'outil, notamment dans le cas de machines à percussion, qu'il s'agisse de mandrins à serrage à clé ou de mandrins autoserrants.

A cet effet, dans le mandrin que concerne l'invention, du type comprenant un corps à l'intérieur duquel sont logés des mors présentant des parties filetées, et actionnables par une vis ou un écrou, il est prévu une rondelle réalisée en un matériau à base de polytétrafluoréthylène, dur et à haut coefficient de glissement entre le corps et l'organe d'actionnement des mors.

Cet agencement permet d'augmenter la puissance de serrage et, par suite, la tenue de l'outil en autorisant un pivotement relatif entre le corps et l'organe d'actionnement des mors, supérieur à sa valeur traditionnelle, tout en assurant un déblocage facile après utilisation. Dans le cas de mandrins autoserrants, cette solution est particulièrement intéressante car la rondelle remplace un roulement à billes, ce qui constitue une solution beaucoup plus économique.

La nature de la rondelle lui confère une fonction d'amortisseur en évitant les transmissions directes entre le corps et l'organe d'actionnement des mors, cette fonction d'amortisseur participant également à l'absence de desserrage accidentel en cours de fonctionnement.

Selon une forme d'exécution de l'invention, la rondelle est collée sur l'organe d'actionnement des mors.

Selon une autre possibilité, la rondelle est engagée dans une rainure périphérique ménagée dans le corps.

Cette seconde solution évite d'avoir à recourir au collage précité.

En outre, dans le cas d'un mandrin autoserrant avec bague de serrage montée à la partie postérieure, la zone de contact entre la rondelle et l'organe d'actionnement des mors est constituée par une surface tronconique.

Cette solution est intéressante car, en raison de la réaction de la rondelle sur une surface inclinée, il se produit un autocentrage de l'organe d'actionnement.

De toute façon, l'invention sera bien comprise à l'aide de la description qui suit en référence au dessin schématique annexé représentant, à titre d'exemples non limitatifs, plusieurs formes d'exécution de ce mandrin:

Figures 1 et 2 sont deux vues en coupe longitudinale d'un premier type de mandrin à serrage à clé;

Figures 3 et 4 sont deux vues en coupe longitudinale de mandrins autoserrants.

Les mandrins représentés aux figures 1 et 2 sont à serrage à clé et conformes au premier mandrin décrit ci-dessus.

Selon l'invention, il est prévu, entre l'écrou 10 et le corps 2 une rondelle 26 réalisée en un matériau dur et à haut coefficient de glissement. Cette rondelle permet d'augmenter la puissance de serrage et, par suite, la tenue de l'outil, tout en assurant un déblocage facile après utilisation.

Dans la forme d'exécution représentée à la figure 1, la rondelle 26 est collée sur l'écrou 10, tandis que, dans la forme d'exécution représentée à la figure 2, il est prévu, dans le corps 2, une rainure 27 périphérique dans laquelle est encastrée la rondelle 26.

Le mandrin représenté aux figures 3 et 4 est un mandrin autoserrant. Dans ce mandrin autoserrant du type décrit précédemment, il est prévu à la place du roulement à billes traditionnel une rondelle 28 disposée entre la pièce centrale 23 et la collerette 24 solidaire du corps 15.

Dans la forme d'exécution représentée à la figure 3, cette rondelle 28 est plane, tandis que, dans la forme d'exécution représentée à la figure 4, elle présente une section de forme générale triangulaire, assurant un autocentrage de la pièce 23 relativement à elle en période de serrage.

## Revendications

1. Mandrin de fixation d'un outil sur une machine outil, du type comprenant un corps (2, 3, 15) à l'intérieur duquel sont logés des mors (6, 19) présentant des parties filetées (12, 22) et actionnables par une vis (23) ou un écrou (10), caractérisé en ce qu'il comporte une rondelle (26, 28) réalisée en un matériau à base de polytétrafluoréthylène, dur et à haut coefficient de glissement, disposée entre le corps (2, 15) et l'organe d'actionnement (10, 23) des mors.

2. Mandrin selon la revendication 1, caractérisé en ce que la rondelle (26, 28) est collée sur l'organe (10, 23) d'actionnement des mors (6, 19).

3. Mandrin selon la revendication 1, caractérisé en ce que la rondelle (26) est engagée dans une rainure périphérique (27) ménagée dans le corps (2).

4. Mandrin selon la revendication 1, caractérisé en ce que, dans le cas d'un mandrin autoserrant avec bague de serrage (25) montée à la partie postérieure, la zone de contact entre la rondelle (28) et l'organe d'actionnement (23) des mors est constituée par une surface tronconique.

## Patentansprüche

1. Werkzeugspannfutter für eine Werkzeugmaschine, umfassend einen Körper (2, 3, 15), in welchem Klemmriegel (6, 19) gelagert sind, die Gewindebereiche (18, 22) aufweisen und durch ein als Schraube (23) oder als Schraubenmutter (10) ausgebildetes Betätigungsorgan betätigbar sind, dadurch gekennzeichnet, daß zwischen dem Körper (2, 15) und dem Betätigungsorgan (10, 23) eine harte und einen hohen Reibungsbeiwert aufweisende Beilagscheibe (26, 28) aus einem auf der Basis von Polytetrafluorethylen aufgebauten Material angeordnet ist.

2. Werkzeugspannfutter nach Anspruch 1, dadurch gekennzeichnet, daß die Beilagscheibe (26, 28) auf das Betätigungsorgan (10, 23) für die Klemmriegel (6, 19) aufgeklebt ist.

3. Werkzeugspannfutter nach Anspruch 1, dadurch gekennzeichnet, daß die Beilagscheibe (26) in eine im Körper (2) ausgebildete Ringnut (27) eingreift.

4. Werkzeugspannfutter nach Anspruch 1, dadurch gekennzeichnet, daß bei einem selbstspannenden Spannfutter mit einem in seinem hinteren Bereich angeordneten Spannring (25) die Kontaktfläche zwischen der Beilagscheibe (28) und dem Betätigungsorgan (23) für die Klemmriegel als Kegelstumpffläche ausgebildet ist.

**Claims**

1. A holding chuck for a tool on a machine-tool, of the type comprising a body (2, 3, 15) in the interior of which vice jaws (6, 19) are accommodated, provided with treaded portions (12, 22) and capable of actuation by a screw (23) or a nut (10), characterized in that it includes a washer (26, 28) made of a hard material with a polytetrafluorethylene base that has a high coefficient of friction and is located between the body (2, 15) and the means of actuation (10, 23) of the vice jaws.

2. A chuk according to Claim 1, characterized in that the washer (26, 28) is held by adhesive to the means of actuation (10, 23) of the vice jaws (6, 19).

3. A chuck according to Claim 1, characterized in that the washer (26) is inserted into a peripheral groove (27) provided in the body (2).

4. A chuck according to Claim 1 characterized in that, in the case of a selftightening chuck with a tightening collar (25) mounted at the rear, the contact surface between the washer (28) and the means of actuation (23) is a frustrum of a cone.

# FIG.1

# FIG.2

# FIG.3

# FIG.4